# NEUE EUROPÄISCHE PATENTSCHRIFT

(11) **EP 2 860 497 B2**
(45) Veröffentlichungstag und Bekanntmachung des Hinweises auf die Entscheidung über den Einspruch: **10.04.2019**
(45) Hinweis auf die Patenterteilung: 08.06.2016
(21) Anmeldenummer: 13187973.6
(22) Anmeldetag: 09.10.2013
(51) Int. Cl.: G01D 5/34

(54) **Optoelektronischer Sensor und Verfahren zur Herstellung eines solchen**
Optoelectronic sensor and method for manufacturing the same
Capteur optoélectronique et son procédé de fabrication

(43) Veröffentlichungstag der Anmeldung: 15.04.2015
(73) Patentinhaber: SICK STEGMANN GmbH, 78166 Donaueschingen (DE)
(72) Erfinder: Hopp, David, 78166 Donaueschingen (DE); Basler, Stefan, 78086 Brigachtal (DE); Mutschler, Reinhold, 78056 Villingen-Schwenningen (DE)
(74) Vertreter: Ludewigt, Christoph

(56) Entgegenhaltungen:
- EP-A1- 1 014 043
- EP-A1- 1 014 043
- US-A1- 2005 023 450
- US-A1- 2008 142 688
- US-B2- 6 567 572

## Beschreibung

Die Erfindung betrifft einen Drehgeber.

Zur Erfassung eines Drehwinkels z. B. einer Welle werden u. a. optische Wirkprinzipien eingesetzt. Unabhängig vom jeweiligen optischen Prinzip bestehen entsprechende Sensoren aus mindestens einer Lichtquelle, einer Maßverkörperung und einem Empfänger. Die Maßverkörperung ist verdrehsteif mit einer Welle verbunden, deren Bewegung zu detektieren ist und erzeugt über eine Relativbewegung zum Empfänger eine Intensitätsmodulation des Signals auf dem Empfänger, welche als Winkelsignal dient. Zwei grundlegende Aufbauvarianten finden Verwendung: transmissiv und reflexiv. Insbesondere die reflexive Auslegung, bei der der Strahlengang an der Maßverkörperung reflektiert wird, hat besondere Vorteile, da nämlich dann Sender und Empfänger auf der gleichen Seite angeordnet werden können, beispielsweise auf der gleichen Elektronikkarte. Damit ist eine echte Entkopplung von Drehgeber und drehender Maßverkörperung möglich. Sender / Empfänger müssen die Maßverkörperung lediglich nur noch "sehen".

Die Auslegung eines reflexiven Strahlengangs stellt je nach optischem Funktionsprinzip eine Herausforderung dar, da die einzelnen Komponenten, vor allem Sender und Empfänger, nicht entlang einer einzigen optischen Achse und orthogonal zu dieser ausgerichtet werden können. Für die meisten optischen Funktionsprinzipien bietet sich jedoch eine mittige Ausrichtung aller Komponenten vor allem aus Symmetriegründen an.

Das Bestreben beim Aufbau reflexiver optischer Funktionsprinzipien für Drehwinkelsensoren ist es, die Beleuchtung, die Maßverkörperung sowie den Empfänger zentrisch auf eine optische Achse zu bringen. Dies erfordert die zentrale Platzierung der Lichtquelle. Eine zentrale Platzierung der Lichtquelle wiederum erfordert eine Platzierung des Empfängers außerhalb der optischen Achse. Eine Symmetrie ergibt sich nur dann, wenn mehrere Empfänger um die Lichtquelle herum positioniert werden oder wenn das Licht umgelenkt wird. Dafür werden jedoch Strahlteiler, Spiegelsysteme o. Ä. benötigt, welche justiert werden müssen. In solchen Systemen sind die einzelnen Komponenten in verschiedenen nicht zueinander parallelen Aufbauebenen angeordnet. Die Positionierung bzw. die Justage der optischen Komponenten in einem System mit mehreren Aufbauebenen ist aufwändig und kostenintensiv. Ebenso ist eine Umlenkung des Beleuchtungsstrahlengangs kompliziert und meist mit erheblichem Intensitätsverlust behaftet. Darüber hinaus benötigt ein solcher Aufbau erheblichen Bauraum.

Als einen möglichen kompakten Aufbau eines reflexiven Drehwinkelsensors wird von der Anmelderin angedacht, den Empfänger koaxial zwischen der Lichtquelle und der Maßverkörperung vorzusehen, wobei das Licht von der Lichtquelle durch eine Öffnung in Form eines Loches in dem Empfänger auf die Maßverkörperung gesendet wird.

Bei dem angedachten Aufbau ist nicht berücksichtigt, dass die Formgebung des Lochs einen Einfluss auf die Ausleuchtung des Lichtempfängers hat.

US 2005/0023450 A1 offenbart einen optoelektronischen Sensor. Hierbei wird vor einem konkaven Abschnitt, in dem die Lichtquelle angeordnet ist, lichtemittierende Schlitzabschnitte vorgesehen, so dass das ausgesendete Licht strukturiert ist.

Es ist eine Aufgabe der Erfindung, einen Drehgeber derart zu verbessern, dass eine geformte Verteilung und eine Homogenität des Empfangslichts auf der Lichtempfangsfläche für eine verbesserte Auswertung des Sensors erzielbar sind.

Diese Aufgabe wird erfindungsgemäß gelöst durch einen Drehgeber mit den Merkmalen des Anspruchs 1.

Der erfindungsgemäße Drehgeber zur Erfassung eines Drehwinkels, ist mit einer Maßverkörperung, einer LED als Lichtsender, die Sendelicht unpolarisiert in Richtung einer sendelichtlenkenden Einheit in Sendelichtrichtungen abstrahlt, die das Sendelicht auf die Maßverkörperung (34) lenkt. wobei die Maßverkörperung (34) das unpolarisierte Sendelicht polarisiert reflektiert mit einer Polarisationsrichtung, die dem aktuellen Drehwinkel entspricht und einem Lichtempfänger mit einer Lichtempfangsfläche vorgesehen, wobei die Lichtempfangsfläche derart angeordnet ist, dass die Lichtempfangsfläche sich im Wesentlichen zwischen der Maßverkörperung und dem Lichtsender befindet und der Lichtempfänger zurückreflektierte Sendelicht als polarisiertes Empfangslicht empfängt, wobei die sendelichtlenkende Einheit aus zumindest einem durchgehenden Loch besteht und derart ausgelegt ist, dass sich ein vordefinierter Auslenkwinkel des Sendelichts zu den Sendelichtrichtungen ergibt, wenn das Sendelicht aus der sendelichtlenkenden Einheit wieder austritt, wobei die sendelichtlenkende Einheit in dem Lichtempfänger vorgesehen ist, und wobei das durchgehende Loch in dem Lichtempfänger derart eingearbeitet ist, dass die sendelichtlenkende Einheit eine zylindrische, konisch divergente, konisch konvergente, bi-konische oder ovale Form aufweist, und die Seitenwände der sendelichtlenkenden Einheit lichtreflektierend mit metallischem Material (48), insbesondere Aluminium, Titan, Kupfer, Silber oder Gold beschichtet, licht-streuend oder licht-teilstreuend ausgebildet sind.

Ein wesentlicher Vorteil der Erfindung ist eine aktive Beeinflussung des Strahlenganges des Sendelichtes, durch eine geeignete Gestaltung des Lichtkanals durch den Lichtempfänger mittels der lichtlenkenden Einheit, die die Verteilung und Homogenität des Empfangslichts auf der Lichtempfangsfläche so formt, dass die Auswertung verbessert wird.

Gemäß einer bevorzugten Ausführung ist das Loch in dem Lichtempfänger durch mechanisches Bohren, Laserbohren, Sandstrahlen oder chemisches Ätzen eingearbeitet. Hierbei kann durch die Lochgeometrie die Charakteristik der gesamten Beleuchtung verändert werden, so dass die sendelichtlenkende Einheit, insbesondere zumindest das Loch, als eine strahlformende Optik wirkt. Vorteilhafterweise kann das Loch pyramidenförmig mit rechteckiger Grundfläche ausgebildet sein.

Nach einer weiteren bevorzugten Ausführung besteht die sendelichtlenkende Einheit aus zumindest einer in dem Lichtempfänger eingesetzten Hülse. Hierbei kann die Hülse je nach Bedarf eine zylindrische, konisch divergente, konisch konvergente, bi-konische oder ovale Form aufweisen. Die Form der Hülse kann außen und innen unterschiedlich ausgeprägt sein, so dass die Hülse als eine Anpassung an eine herstellungstechnisch eher ungünstige Lochgeometrie dienen kann.

Insbesondere kann eine Blendenwirkung der sendelichtlenkenden Einheit, insbesondere des Loches bzw. der Hülse, ausgenutzt werden, um gezielt das Sendelicht abzuschatten und/oder um gezielt Beugungseffekte des Sendelichtes zu erzeugen.

Die bei der Reflexion entstehende Polarisation bzw. Phasensprünge an der beschichteten Oberfläche kann/können gezielt eingesetzt werden, um z.B. einen Polarisationszustand zu ändern und/oder zu mischen. Zusätzlich kann eine Beschattung der photoempfindlichen Lichtempfangsflächen auf dem Lichtempfänger erreicht werden, wodurch Störlichteinflüsse vermieden oder zumindest reduziert werden können. Vorteilhafterweise gegenüber zur spiegelnden Beschichtung können auch gezielt die Eigenschaften der Totalreflexion in Abhängigkeit der jeweiligen Brechungsindizes der eingesetzten Materialien an den Seitenwänden der sendelichtlenkenden Einheit genutzt werden.

In der sendelichtlenkenden Einheit, die in einer Aussparung im Lichtempfänger und/ oder in der Leiterkarte, vorgesehen ist, kann ein optisches Element mit lichtbrechender, lichtbeugender und/oder lichtpolarisierender Funktion und/oder mit diffraktiven Strukturen zur Beugung, Umlenkung oder Dispersion des Sendelichts vorgesehen sein. Das optische Element kann auch als optischer Filter mit Wellenlängenselektion für das Sendelicht ausgebildet sein. Dies hat den Vorteil, dass optische Linsen- und/oder Filterfunktionen in dem optoelektronischen Sensor integriert sein können und damit weitere separate optische Komponenten eingespart werden können.

Vorteilhafterweise ist der Lichtsender als eine LED, oder eine Laserdiode ausgebildet. Der Lichtempfänger kann als Empfängerarray in CCD oder in CMOS Bauweise oder als Cluster von Photodioden auf einem Halbleiterchip ausgebildet sein.

Die Erfindung ist in Drehwinkelsensoren einsetzbar, die nach dem polarisationsoptischen Prinzip den Drehwinkel bestimmen und bei denen der Strahlengang reflexiv ausgelegt ist. Dazu weist der Drehgeber einen Polarisator auf, der sich relativ zur Lichtquelle dreht und eine Maßverkörperung bildet. An dem Polarisator wird das Sendelicht reflektiert und tritt durch einen oder mehrere linear polarisierende Analysatoren, die jeweils vor Empfangselementen angeordnet sind. Der Empfänger weist wenigstens zwei getrennt auswertbare Empfangsbereiche auf, die den Analysatoren zugeordnet sind, wobei die Polarisationsrichtungen der Analysatoren in einem Winkel zueinander versetzt sind. Der Empfänger ist vorzugsweise als Lichtempfängerarray ausgebildet. Durch Auswertung der von den beiden Empfangsbereichen erhaltenen Signale können inkremental ein Drehwinkel und eine Drehrichtung bestimmt werden.

Um eine Eindeutigkeit über 360° zu erzielen, kann der Polarisator als Scheibe mit einer Normalen ausgebildet sein, wobei die Normale mit der Drehachse einen von Null verschiedenen Winkel bildet.

Im Folgenden wird die Erfindung anhand von Ausführungsbeispielen unter Bezugnahme auf die Zeichnungen im Einzelnen erläutert. In den Zeichnungen zeigen:
- Fig. 1: eine schematische Darstellung eines gedachten optoelektronischen Sensors, der nicht unter die Erfindung fällt;
- Fig. 2-2A: eine schematische Darstellung einer erfindungsgemäßen Ausführungsform des optoelektronischen Sensors mit einer sendelichtlenkenden Einheit;
- Fig. 3-6: eine erfindungsgemäße Ausführungsform der sendelichtlenkenden Einheit;
- Fig. 7: eine weitere erfindungsgemäße Ausführungsform der sendelichtlenkenden Einheit als eine Hülse; und
- Fig. 8: eine weitere Ausführungsform mit Verwendung eines zusätzlichen Strahlformungselements.

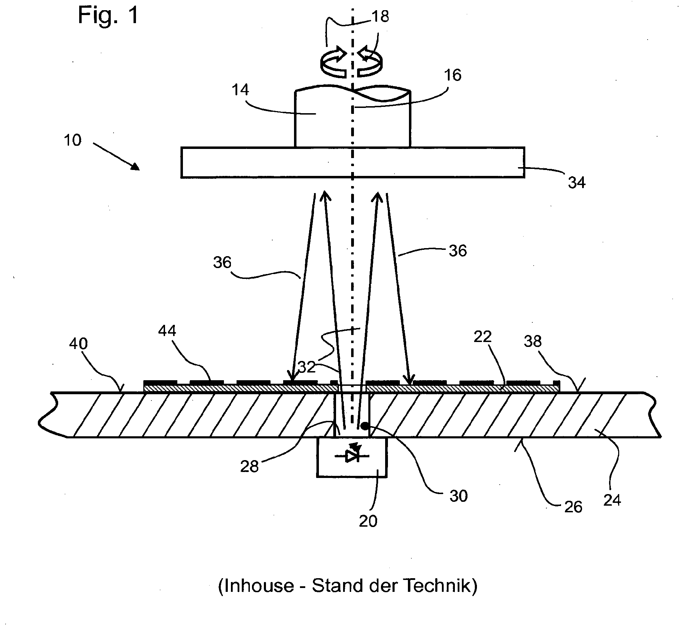

In der Figur 1 ist ein von der Anmelderin angedachter optoelektronischer Sensor 10 gezeigt, der zur Erfassung eines Drehwinkels einer Welle 14 dient, die sich um eine Drehachse 16 in den dargestellten Pfeilrichtungen 18 dreht. Der Sensor 10 ist drehfest angeordnet und kann die Drehung der Welle 14 in diesem Ausführungsbeispiel nach dem optischen Prinzip bestimmen.

Anhand des Beispiels wird die Funktionsweise des optoelektronischen Sensors 10, insbesondere eines Drehgebers, beschrieben, der nach dem Prinzip der Polarisation, also durch Detektion einer Polarisationsrichtung, den Drehwinkel bestimmt.

Ein Sendelicht 32 eines Lichtsenders 20, das im Falle einer LED unpolarisiert ist, wird leicht divergent kegelförmig abgestrahlt und trifft auf eine sich mit der Welle 14 drehende Maßverkörperung 34, die hier als Linearpolarisator ausgebildet ist. Das von der Maßverkörperung 34 bzw. dem Polarisator reflektierte Licht (Empfangslicht 36) weist dann eine lineare Polarisation auf, deren Richtung dem aktuellen Drehwinkel der Welle 14 entspricht. Das Empfangslicht 36 durchtritt einen Analysator bzw. photoempfindlichen Detektor 44, der nichts anderes ist als ein Linearpolarisator, und wird von einem unterhalb des Analysators 44 gelegenen Empfangsbereich eines Lichtempfängers 22 detektiert. Vorteilhafterweise ist der Lichtempfänger 22 als Empfängerarray oder dergleichen ausgebildet, wobei vor jedem Empfangselement ein Analysator 44 angeordnet ist und die Analysatoren 44 unterschiedliche Polarisationsrichtungen aufweisen. Die Intensität des durch die Empfangselemente gemessenen Lichts hat eine cos²-Abhängigkeit vom Drehwinkel. Durch die cos²-Signale der Empfangselemente, die hinter Analysatoren angeordnet sind, deren Polarisationsrichtung einen Winkelversatz zueinander aufweisen, kann in bekannter Weise der relative Verdrehwinkel sowie die Drehrichtung bestimmt werden.

Der Sensor 10 weist somit einen Lichtsender 20 und einen Lichtempfänger 22 auf. Lichtsender 20 und Lichtempfänger 22 sind symmetrisch angeordnet, was bei diesem Aufbau bedeutet, dass sie symmetrisch zur Drehachse 16 liegen und ihre jeweiligen optischen Achsen mit der Drehachse 16 zusammenfallen.

Der Lichtsender 20 ist auf einer Rückseite 26 einer Elektronikkarte 24 angeordnet, die gleichzeitig als Schaltungsträger für den Lichtempfänger 22 ausgelegt ist, befestigt und zwar in der Weise, dass die Licht abstrahlende Fläche 28 des Lichtsenders 20 zur Rückseite 26 hin gerichtet ist. Damit das Licht aus dem Lichtsender 20 dann auch austreten kann, weist die Elektronikkarte 24 ein Loch 30 auf, das mit der Licht abstrahlenden Fläche 28 fluchtet und so Sendelicht 32 entlang der optischen Achse 16 in Richtung auf die Maßverkörperung 34 strahlen kann.

Von der Maßverkörperung 34 wird das Sendelicht 32 reflektiert und fällt als Empfangslicht 36 auf eine Lichtempfangsfläche 38 des Lichtempfängers 22. Die Lichtempfangsfläche 38 ist der Maßverkörperung 34 zugewandt, wobei die optische Achse des Lichtempfängers 22 koaxial zur optischen Achse des Lichtsenders 20 liegt. Der Lichtempfänger 22 ist vorzugsweise als eine Anordnung mehrerer Photodioden ausgebildet und besonders bevorzugt als Lichtempfängerarray mit mehreren Empfangselementen in CCD- oder CMOS-Bauweise.

Somit ist eine Anordnung geschaffen, bei der das Sendelicht 32 in Sendelichtrichtungen abstrahlt, die vom Lichtsender 20 durch die Lichtempfangsfläche 38 in Richtung der Maßverkörperung 34 strahlt und somit der Lichtsender 20 und der Lichtempfänger 22 gewissermaßen "in die gleiche Richtung" schauen. Das Sendelicht 32 des auf der der Lichtempfangsfläche 38 abgewandten Seite des Lichtempfängers 22 angeordneten Lichtsenders 20 tritt dabei mittig durch den Lichtempfänger 22 hindurch, so dass das Empfangslicht 36, das durch Reflexion an der Maßverkörperung 34 entstanden ist, rund um das Loch 30 auf die Lichtempfangsfläche 38 fallen kann und somit vom Lichtempfänger 22 nachgewiesen wird.

Die Elektronikkarte 24 kann weitere nicht dargestellte elektronische Komponenten, z.B. zur Ansteuerung des Lichtsenders 20 und/oder Auswertung der Signale des Lichtempfängers 22 und/oder Verarbeitung der Signale und Ausgabe von Ausgangssignalen, z. B. in Form von Winkelwerten, aufweisen.

Der Lichtsender 20 kann eine LED, ein LED-Chip, eine Laserdiode oder ein Laserchip sein.

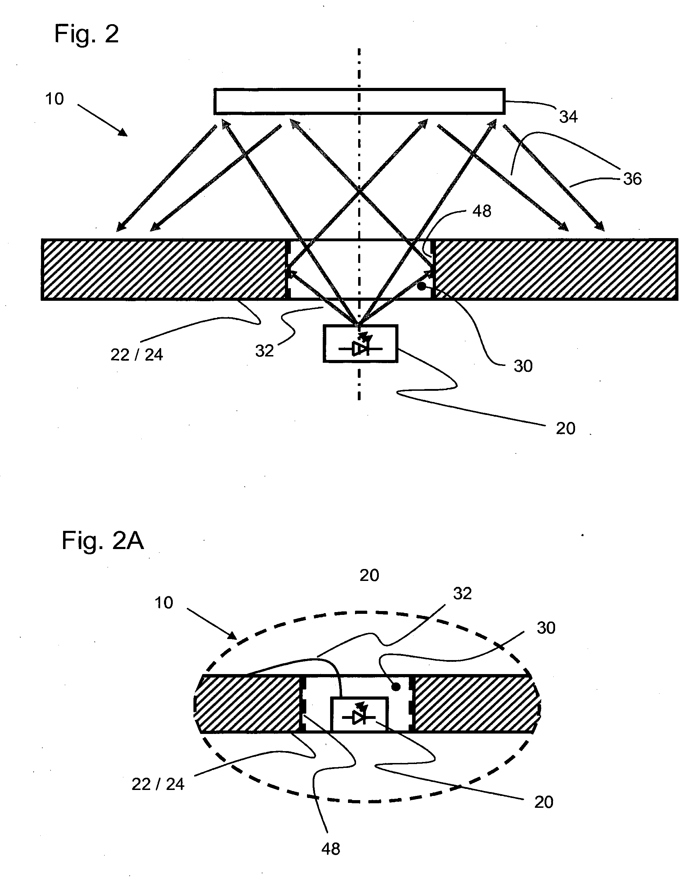

Fig. 2 zeigt einen schematischen Aufbau eines erfindungsgemäßen Sensors 10, bei dem eine sendelichtlenkende Einheit, insbesondere in Form eines zylindrischen Loches 30, in dem Lichtempfänger 22 vorgesehen ist. Die sendelichtlenkende Einheit ist durch mechanisches Bohren, Laserbohren, Sandstrahlen oder chemisches Ätzen, derart eingearbeitet, dass sie koaxial zwischen dem Lichtsender 20 und der Maßverkörperung 34 angeordnet ist.

Das Sendelicht 32 wird vom Lichtsender 20 in Richtung der sendelichtlenkenden Einheit gesendet, so dass das Sendelicht 32 in der sendelichtlenkenden Einheit an dessen Seitenwänden, die lichtreflektierend, insbesondere mit metallischem Material 40, insbesondere Aluminium, Titan, Kupfer, Silber oder Gold, beschichtet verarbeitet sind, in einem vordefinierten Winkel reflektiert wird und mit einem daraus resultierenden gewollten Austrittwinkel aus der sendelichtlenkenden Einheit wieder austritt bzw. mit einem daraus resultierenden gewollten Einfallwinkel auf die Maßverkörperung 34 auftrifft.

Entsprechend wird das Sendelicht 32 als Empfangslicht 36 mit dem definierten Winkel von der Maßverkörperung 34 auf die Lichtempfangsfläche 38 rückreflektiert, wo das Empfangslicht 36 mit allen Größen, wie z.B. Lichtintensität und Polarisationswinkel, ausgewertet wird.

Dadurch kann ein vordefinierter Strahlengang erreicht werden, der eine verbesserte Auswertung ermöglicht.

Vorteilhafterweise ist der Lichtempfänger 22 und die Elektronikkarte 24 als ein monolithisches Element ausgebildet, so dass ein sehr kompakter Aufbau sich zusätzlich ergibt.

Fig. 2A zeigt ein erfindungsgemäßes Ausführungsbeispiel mit einer integrierten Anordnung des Lichtsenders 20 in der sendelichtlenkenden Einheit, wobei die Seitenwände lichtreflektierend mit metallischem Material 48 beschichtet sind.

Hierbei ist der Lichtsender 20 innerhalb des Loches 30 des Lichtempfängers 22 angeordnet, so dass die axiale Baugröße des Sensors 10 weiter reduziert werden kann. Eine elektrische Kontaktierung erfolgt über einen Bonddraht 32, der in der dargestellten Ausführung mit dem Lichtempfänger 22 direkt gebondet bzw. elektrisch verbunden ist.

Bei dieser Anordnung ist der Lichtsender 20 nicht durch den Lichtempfänger 22 teilbedeckt, so dass die volle Lichtstärke des Lichtsenders 20 zur Messung zur Verfügung gestellt werden kann.

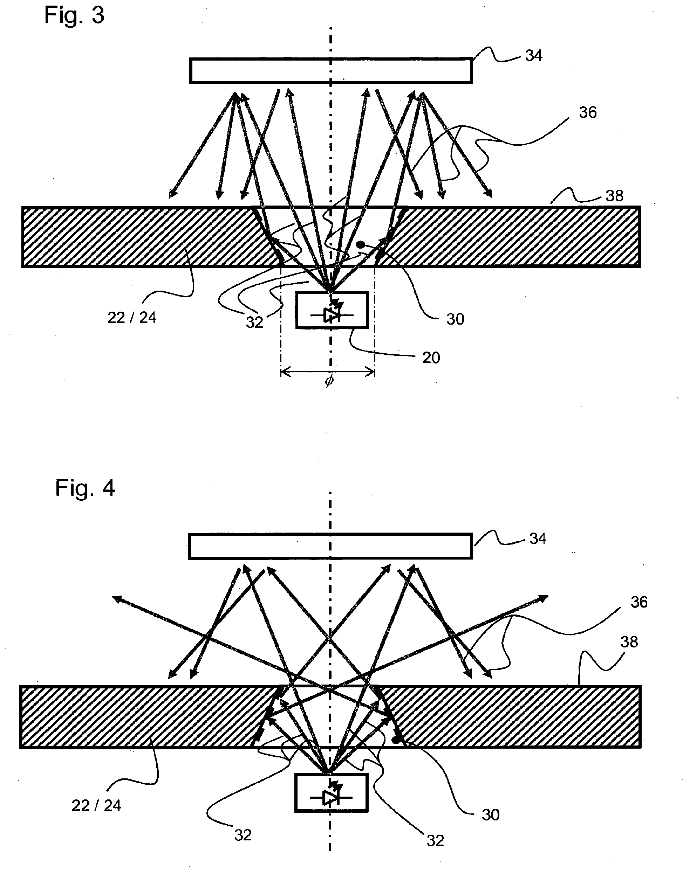

Gemäß der Fig. 3 ist die sendelichtlenkende Einheit in Form eines konisch divergenten Loches 30 ausgebildet, so dass die sendelichtlenkende Einheit ähnlich einer Sammellinse wirkt. Hierbei nimmt ein Innendurchmesser *φ* der sendelichtlenkenden Einheit, insbesondere des Loches 30, von dem Lichtsender 20 in Richtung der Maßverkörperung 34 zu. Dadurch ist eine Summe der Strahlwinkel des Sendelichts 32 beim Austritt aus der sendelichtlenkenden Einheit kleiner als beim Eintritt in derselben. Somit wird das Sendelicht 32 tendenziell in Richtung deroptischen Achse gebündelt, wodurch eine wesentlich stärkere Lichtintensität erzielbar ist. Der reduzierte Strahlwinkel wird entsprechend von der Maßverkörperung 34 auf die Lichtempfangsfläche 38 reflektiert, so dass eine Bündelung des Empfangslichts 36 auf die Lichtempfangsfläche 38 mit höherer Intensität des Signals zu einer verbesserten Auswertung führt.

Im Gegensatz zum vorher beschriebenen Ausführungsbeispiel kann zweckmäßigerweise auch eine Streuung anstatt einer Fokussierung des Strahlwinkels gewollt sein, so dass gemäß Fig. 4 eine konisch konvergente sendelichtlenkende Einheit in dem Lichtempfänger 22 vorgesehen ist. Der Innendurchmesser der sendelichtlenkenden Einheit nimmt hierbei von dem Lichtsender 20 in Richtung der Maßverkörperung 34 ab, so dass der Lichtstrahl des Sendelichts 32 von der optischen Achse weg reflektiert wird. Zwar ist in diesem Ausführungsbeispiel die Beleuchtungsstärke des Lichtempfängers geringer, jedoch kann ein größerer Bereich des Lichtempfängers beleuchtet werden, was in manchen Anwendungen vorteilhaft ist.

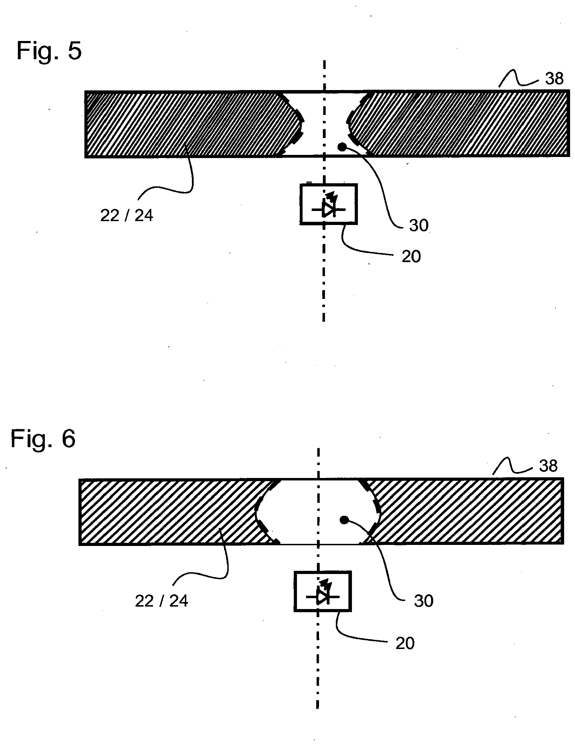

In den Fig. 5 und 6 ist die sendelichtlenkende Einheit jeweils als ein bi-konisches oder ovales Loch 30 ausgebildet. Hieraus ergeben sich vordefinierte zweckmäßige Auslenkwinkel bzw. Strahlwinkel, die für einen Verwendungszweck des Sensors 10 entsprechend geeignet sind.

Vorteilhafterweise sind die Seitenwände der sendelichtlenkenden Einheit, insbesondere des Loches 30, mit lichtreflektierendem Material, insbesondere metallischem Material wie Aluminium, Titan, Kupfer, Silber, Gold oder dergleichen, beschichtet verarbeitet, so dass die Seitenflächen optisch gesehen Lichtleiter darstellen, da das von einer Seite in das Loch 30 eingestrahlter Sendelicht 32 so lange mit vordefiniertem Auslenkwinkel reflektiert wird, bis es am anderen Ende des Lochs 30 wieder austritt. Je nach der Geometrie der sendelichtlenkenden Einheit kann dabei die Charakteristik der gesamten Beleuchtung verändert werden. Die sendelichtlenkende Einheit bzw. das Loch 30 stellt dabei selbst eine strahlformende Optik dar. In besonderen Fällen kann somit erreicht werden, dass ein Teil des Sendelichts 32 nicht auf der anderen Seite der sendelichtlenkenden Einheit wieder austritt.

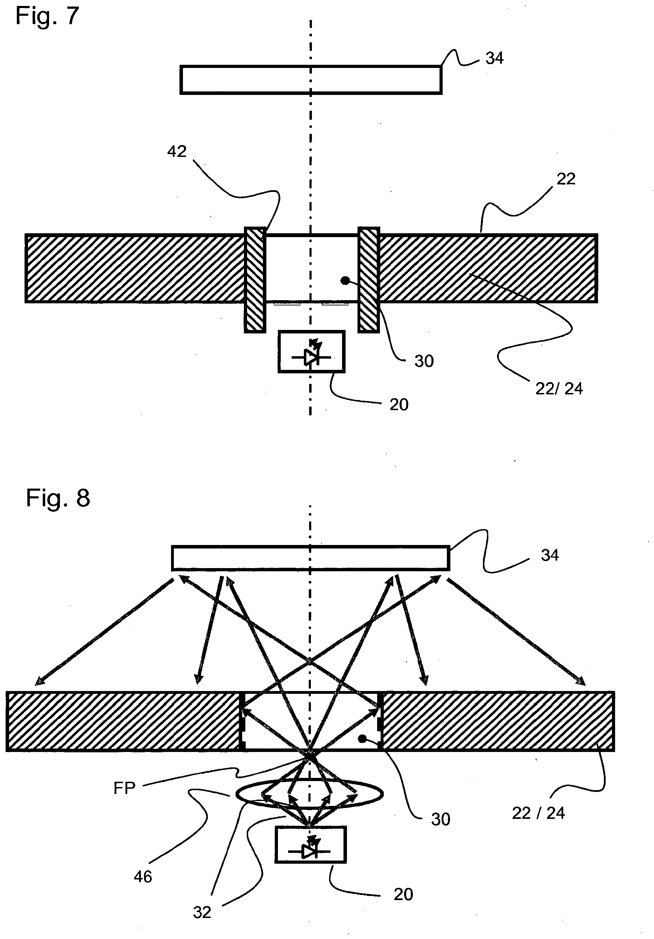

In Fällen, bei denen die Herstellung des definierten Loches 30 als sendelichtlenkende Einheit in der Elektronikkarte 24 bzw. des Lichtempfängers 22 sich als zu aufwändig herausstellt, ist es zweckmäßiger, eine Hülse 42 als sendelichtlenkende Einheit, wie in Fig. 7 gezeigt, zu verwenden. Hierbei weist die Hülse 42 eine definierte zweckgebundene Form auf, die insbesondere zylindrische, konisch divergente, konisch konvergente, bi-konische oder ovale Seitenwände aufweist. Die Seitenwände sind bevorzugt mit lichtreflektierendem Material, insbesondere Aluminium, Titan, Kupfer, Silber, Gold oder dergleichen, beschichtet. Die Hülse 42 kann an sich komplett aus den vorgenannten Materialien bestehen, so dass die Herstellung des erfindungsgemäßen Sensors 10 durch das Einsetzen der Hülse 42 in die Elektronikkarte 24 bzw. den Lichtempfänger 22 vereinfacht wird.

Die Seitenwände der sendelichtlenkenden Einheit können licht-streuend oder licht-teilstreuend verarbeitet sein, so dass keine reine spiegelnde Charakteristik erzielt wird, um z.B. eine Homogenisierung des Sendelichts 32, insbesondere der Beleuchtung des Sensors 10, zu ermöglichen.

In Fig. 8 ist eine weitere Ausführungsform des Sensors 10 gezeigt, bei der ein Strahlformungselement 44, insbesondere in Form einer Linse oder eines diffraktiven Elements, zwischen dem Lichtsender 20 und der sendelichtlenkenden Einheit angeordnet ist. Das Strahlformungselement 44 ist derart angeordnet, dass ein Fokuspunkt FP des Sendelichts 32 direkt vor dem Eingang der sendelichtlenkenden Einheit, idealerweise im Eingang derselben, gebildet wird, so dass anhand der bekannten optischen Parameter, wie z.B. die Abstände zwischen den einzelnen Komponenten, die Brennweite des Strahlformungselements und dergleichen, eine exakte Auswertung erleichtert bzw. ermöglicht wird.

Vorteilhafterweise können auf einer Elektronikkarte 24 mit integriertem Lichtempfänger 22 mehrere sendelichtlenkende Einheiten und zugehörige Lichtsender 20 vorgesehen sein. Die Einheiten und Lichtsender 20 sind in einem vorgegebenen Muster bzw. Raster auf der Elektronikkarte 24 mit integriertem Lichtempfänger 22 angeordnet.

Bei der Herstellung des optoelektronischen Sensors werden somit eine Maßverkörperung 34, ein Lichtsender 20, der Sendelicht in Sendelichtrichtungen abstrahlt, und ein Lichtempfänger 22 mit einer Lichtempfangsfläche 38 derart angeordnet, dass die Lichtempfangsfläche 38 sich im Wesentlichen zwischen der Maßverkörperung 34 und dem Lichtsender 20 befindet und der Lichtempfänger 22 zurückreflektiertes Sendelicht 32 als Empfangslicht 36 empfängt, und eine sendelichtlenkende Einheit in dem Lichtempfänger 22 derart vorgesehen, dass das Sendelicht 32 einen vordefinierten Auslenkwinkel zu den Sendelichtrichtungen erfährt, wenn es aus der sendelichtlenkenden Einheit wieder austritt.

Dabei wird ein Loch 30 als sendelichtlenkende Einheit in dem Lichtempfänger 22 mechanisch gebohrt, lasergebohrt, sandgestrahlt oder chemisch geätzt. Falls sich die gewünschten Merkmale des austretenden ausgelenkten Sendelichts 32 durch das Loch 30 im Lichtempfänger 22 bzw. in der Elektronikkarte 24 mit integriertem Lichtempfänger 22 nicht erreichen lassen, kann eine Hülse 42 als sendelichtlenkende Einheit in den Lichtempfänger 22 eingesetzt werden, die entsprechend geformt ist, um die gewünschte Lenkung des Sendelichts 32 zu erreichen. Hierbei kann die Hülse 42 insbesondere aus lichtreflektierendem Material, wie z.B. Aluminium, Titan, Kupfer, Silber, Gold oder dergleichen, oder aus lichtstreuendem Material hergestellt sein.

**Bezugszeichenliste**

| | | | |
|---|---|---|---|
| 10 | Optoelektronischer Sensor | 42 | Hülse |
| 14 | Welle | 44 | Analysator bzw. photoempfindlicher Detektor |
| 16 | Drehachse | 46 | Strahlformungselement |
| 18 | Drehrichtung | 48 | Lichtreflektierendes Material |
| 20 | Lichtsender | FP | Fokuspunkt |
| 22 | Lichtempfänger | | |
| 24 | Elektronikkarte | | |
| 26 | Rückseite | | |
| 30 | Loch | | |
| 32 | Sendelicht | | |
| 34 | Maßverkörperung | | |
| 36 | Empfängerlicht | | |
| 38 | Lichtempfangsfläche | | |
| 40 | Oberseite | | |

## Patentansprüche

1. Drehgeber für die Erfassung eines Drehwinkels, mit einer Maßverkörperung (34), einer LED als Lichtsender (20), die Sendelicht (32) unpolarisiert in Richtung einer sendelichtlenkenden Einheit in Sendelichtrichtungen abstrahlt, die das Sendelicht auf die Maßverkörperung (34) lenkt, wobei die Maßverkörperung (34) das unpolarisierte Sendelicht polarisiert reflektiert mit einer Polarisationsrichtung, die dem aktuellen Drehwinkel entspricht und einem Lichtempfänger (22) mit einer Lichtempfangsfläche (38), die derart angeordnet ist, dass die Lichtempfangsfläche (38) sich im Wesentlichen zwischen der Maßverkörperung (34) und dem Lichtsender (20) befindet und der Lichtempfänger (22) zurückreflektierte Sendelicht (32) als polarisiertes Empfangslicht (36) empfängt, wobei die sendelichtlenkende Einheit aus zumindest einem durchgehenden Loch (30) besteht und derart ausgelegt ist, dass sich ein vordefinierter Auslenkwinkel des Sendelichts (32) zu den Sendelichtrichtungen ergibt, wenn das Sendelicht (32) aus der sendelichtlenkenden Einheit wieder austritt, wobei die sendelichtlenkende Einheit in dem Lichtempfänger (22) vorgesehen ist, und wobei das durchgehende Loch (30) in dem Lichtempfänger (22) derart eingearbeitet ist, dass die sendelichtlenkende Einheit eine zylindrische, konisch divergente, konisch konvergente, bi-konische oder ovale Form aufweist, und die Seitenwände der sendelichtlenkenden Einheit lichtreflektierend mit metallischem Material (48), insbesondere Aluminium, Titan, Kupfer, Silber oder Gold beschichtet, licht-streuend oder licht-teilstreuend ausgebildet sind.

2. Drehgeber nach Anspruch 1, **dadurch gekennzeichnet, dass** das Loch (30) in dem Lichtempfänger (22) durch mechanisches Bohren, Laserbohren, Sandstrahlen oder chemisches Ätzen, eingearbeitet ist.

3. Drehgeber nach Anspruch 2, **dadurch gekennzeichnet, dass** das Loch (30) pyramidenförmig mit rechteckiger Grundfläche ausgebildet ist.

4. Drehgeber nach Anspruch 1, **dadurch gekennzeichnet, dass** die sendelichtlenkende Einheit aus zumindest einer in dem Lichtempfänger (22) eingesetzten Hülse (42) besteht.

## Claims

1. Rotary Encoder for the detection of an angle of rotation, having a measuring standard (34); an LED as light transmitter (20), which emits transmitted light (32) in an unpolarised manner in the direction of a transmitting light-directing unit in transmitted light directions, which directs the transmitted light onto the measuring standard (34), wherein the measuring standard (34) reflects the unpolarised transmitted light in a polarized manner with a polarization direction corresponding to the current angle of rotation; and a light receiver (22) with a light reception surface (38) which is arranged such that the light reception surface (38) is substantially located between the measuring standard (34) and the light transmitter (20) and the light receiver (22) receives transmitted light (32) reflected back as polarized received light (36); wherein the transmitting light-directing unit comprises at least one through hole (30) and is configured such that a predefined deflection angle of the transmitted light (32) with respect to the transmitted light directions results when the transmitted light (32) again exits the transmitting light-directing unit, wherein the transmitting light-directing unit is provided in the light receiver (22), and wherein the through hole (30) is worked into the light receiver (22) such that the transmitting light-directing unit has a cylindrical, conically divergent, conically convergent, bi-conical or oval shape, and the side walls of the transmitting light-directing unit are coated in a light-reflective manner with a metallic material (48), in particular aluminium, titanium, copper, silver or gold, formed light-scattering or partly light-scattering.

2. Rotary Encoder in accordance with claim 1, **characterised in that** the hole (30) is worked into the light receiver (22) by mechanical drilling, laser drilling, sandblasting or chemical etching.

3. Rotary Encoder in accordance with claim 2, **characterised in that** the hole (30) is pyramid-shaped with a rectangular base surface.

4. Rotary Encoder in accordance with claim 1, **characterised in that** the unit directing transmitted light comprises at least one sleeve (42) inserted in the light receiver (22).

## Revendications

1. Codeur rotatif pour la détection d'un angle de rotation, comprenant un étalon de mesure (34) ; une LED en tant qu'émetteur de lumière (20), qui émet de la lumière transmise (32) de manière non polarisée dans la direction d'une unité de transmission de lumière dans des directions de lumière transmise, qui dirige la lumière transmise sur l'étalon de mesure (34), l'étalon de mesure (34) réfléchissant la lumière transmise non polarisée dans une direction polarisée correspondant à l'angle de rotation courant ; et un récepteur de lumière (22) avec une surface de réception de lumière (38) qui est agencée de telle sorte que la surface de réception de lumière (38) est sensiblement située entre l'étalon de mesure (34) et l'émetteur de lumière (20) et le récepteur de lumière (22) reçoit de la lumière transmise (32) réfléchie en tant que lumière polarisée reçue (36); dans laquelle l'unité émettrice de guidage de la lumière comprend au moins un trou traversant (30) et est configurée de telle sorte qu'un angle de déviation prédéfini de la lumière transmise (32) par rapport aux directions de la lumière transmise résulte lorsque la lumière transmise (32) quitte à nouveau l'unité émettrice de guidage de la lumière, dans laquelle l'unité émettrice de guidage de la lumière est prévue dans le récepteur (22), et dans lequel le trou traversant (30) est usiné dans le récepteur de lumière (22) de telle sorte que l'unité émettrice de direction de la lumière ait une forme cylindrique, conique, conique, conique, convergente, biconique ou ovale, et les parois latérales de l'unité émettrice de direction de la lumière sont revêtues, par réflexion de la lumière, d'un matériau métallique (48), notamment d'aluminium, titane, cuivre, argent ou or, formée par diffusion partielle ou totale de lumière.

2. Codeur rotatif selon la revendication 1, **caractérisé en ce que** le trou (30) dans le récepteur de lumière (22) est ménagé par perçage mécanique, par perçage au laser, par sablage ou par attaque chimique.

3. Codeur rotatif selon la revendication 2, **caractérisé en ce que** le trou (30) est réalisé sous forme de pyramide avec une surface de base rectangulaire.

4. Codeur rotatif selon la revendication 1, **caractérisé en ce que** l'unité de déflexion de la lumière émise est constituée par au moins une douille (42) intégrée dans le récepteur de lumière (22).
